# EUROPEAN PATENT APPLICATION

(11) **EP 4 302 900 A1**
(43) Date of publication of application: **10.01.2024**
(21) Application number: 22762951.6
(22) Date of filing: 15.02.2022
(51) Int. Cl.: B22D 11/10, C04B 41/87

(54) **HIGH-THERMAL-CONDUCTIVITY HEAT INSULATION MATERIAL**

(30) Priority: 01.03.2021 JP 2021031874
(71) Applicant: Akechi Ceramics Co., Ltd., Ena-shi, Gifu 5097795 (JP)
(72) Inventor: KACHI Keisuke, Ena-shi, Gifu 509-7795 (JP); SHINATO Masahiro, Ena-shi, Gifu 509-7795 (JP)
(74) Representative: Goddar, Heinz J.
(86) International application number: PCT/JP2022/005784
(87) International publication number: WO 2022/185894

(57) **Abstract**

[Problem] The present invention addresses the problem of providing a high heat conductive heat insulation material that can reduce the hindrance to temperature rise of a refractory during preheating, shorten the preheating time, and improve heat insulation properties after preheating.

[Solution] A heat conductive heat insulation material 1 according to the present invention coats the surface of a refractory used for casting and contains a substance imparting heat conductivity. Therefore, the high heat conductive heat insulation material can reduce the hindrance to temperature rise of the refractory during preheating, shorten the preheating time, and improve the heat insulation properties by forming voids as the high heat conductive heat insulation material burns out.

## Description

### Technical Field

The present invention relates to a high heat conductive heat insulation material for coating the surface of a refractory such as a nozzle for continuous casting.

### Background Art

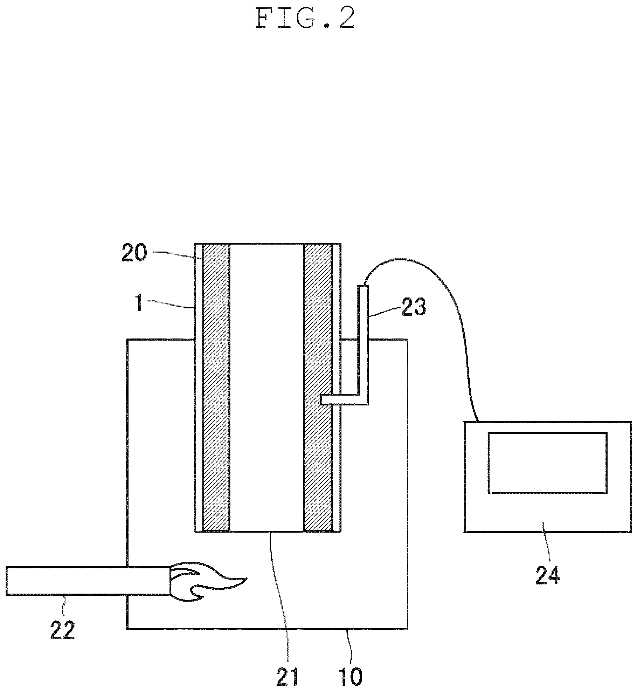

In continuous casting, molten steel at approximately 1500-1600°C is poured through a continuous casting nozzle. In this case, the continuous casting nozzle is subjected to a severe heat load that may cause cracks or breakage thereof, so that the continuous casting nozzle is preheated to prevent damage. As a method of preheating, for example, as shown in Fig. 2, a burner 22 capable of supplying fuel gas and oxygen from a lower discharge port 21 of a nozzle 20 for continuous casting placed in a furnace of a preheating device 10 is generally used to heat a material to 1000-1300°C.

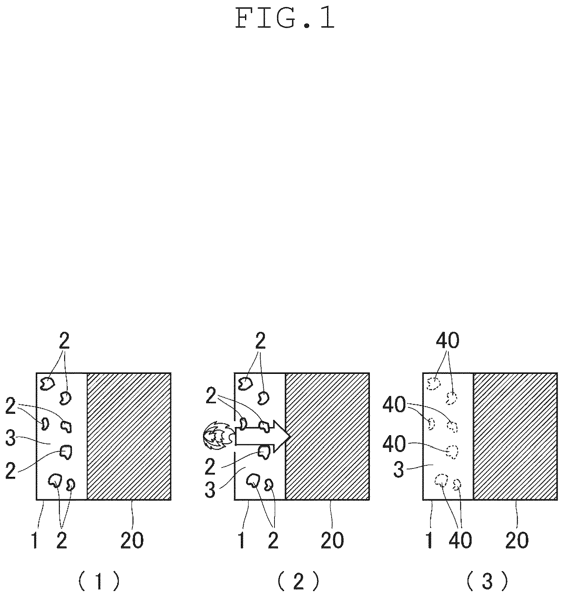

The continuous casting nozzle is subjected to severe heat shock during pouring of the molten steel since the nozzle cools down until the casting starts after completion of preheating, so that an insulation material 30 for a refractory is applied to the surface of the continuous casting nozzle 20 (a refractory) to prevent cooling during standby, as shown in Fig. 1(1).

This type of heat insulating material 30 tends to have as low a heat conductivity as possible in order to prevent heat removal after preheating (for example, a heat insulation coating material for continuous casting nozzles disclosed in Japanese Patent Application Publication No. JP 2018-62438A). Therefore, during preheating, as shown in Fig. 5(2) of the above publication, the insulation material 30, which has low heat conductivity, hinders the temperature rise of the refractory and slows down the temperature increase, so that the preheating time has to be increased.

### Prior Art Document

### Patent Documents

Patent Document 1: Japanese Patent Application Publication No. JP 2018-62438A

### Summary of the Invention

### Problem to Be Overcome by the Invention

Therefore, an object of the present invention is to provide a high heat conductive heat insulation material that can reduce the hindrance to the temperature rise of the refractory during preheating, shorten the preheating time, and improve the heat insulation properties after preheating.

### Means for Overcoming the Problem

To overcome the problem, the present invention provides a high heat conductive heat insulation material for coating a surface of a refractory used in casting, characterized in that the heat insulation material contains a substance imparting heat conductivity (claim 1).

The substance imparting heat conductivity may be a carbon material (claim 2). The carbon material may be scale graphite, carbon fiber or carbon black (claim 3). The substance imparting heat conductivity may be a mixture of two or more types of the carbon materials (claim 4). The substance imparting heat conductivity may be contained in 5-50% by weight (claim 5).

### Effect of the Invention

The high heat conductive heat insulation material according to any one of claims 1 to 4 can reduce the hindrance to the temperature rise of the refractory during preheating, shorten the preheating time, and improve the insulation properties after preheating.

The high thermal conductivity insulation material according to claim 5 can achieve the effect of any one of the above claims more reliably.

### Brief Description of the Drawings

Fig. 1 is an explanatory diagram for explaining the action of the high heat conductive heat insulation material according to the present invention;
Fig. 2 is an explanatory diagram of a temperature measuring method for explaining the effect of the high heat conductive heat insulation material according to the present invention;
Fig. 3 is a graph showing temperature rise transition during preheating by the temperature measurement method of Fig. 2;
Fig. 4 is a graph showing transition of temperature drop after preheating by the temperature measuring method of Fig. 2; and

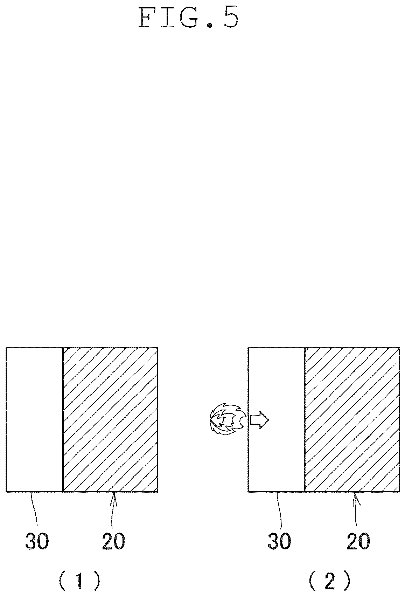

Fig. 5 is an explanatory diagram for explaining the action of a conventional heat insulation material.

### Best Mode for Carrying Out the Invention

The present invention has achieved a high heat conductive heat insulation material 1 for coating a surface of a refractory used in casting, which contains a substance imparting heat conductivity, with the result that the heat insulation material can reduce the hindrance to the temperature rise of the refractory during preheating, shorten the preheating time, and improve the insulation properties after preheating.

### Embodiment 1

The heat conductive heat insulation material according to the present invention will be described with use of an embodiment shown in Figs. 1 to 4.

A heat conductive heat insulation material 1 of the embodiment is an insulation material for coating the surface of a refractory used in casting and is characterized in that the insulation material contains a substance 2 imparting heat conductivity. The configuration of the insulation material 1 will be described in detail below.

The heat conductive heat insulation material 1 of the embodiment is a spray-type insulation material for coating the surface of a refractory 20 such as a continuous casting nozzle used for continuous casting and contains the substances 2 imparting heat conductivity, as shown in Fig. 1(1).

Since the high heat conductive heat insulation material 1 according to the present invention contains the substances 2 imparting heat conductivity, the heat-conductivity-imparting substances 2 promote the temperature rise of the refractory 20 during preheating, whereby the high heat conductive heat insulation material 1 can shorten the preheating time, as shown Fig. 1(2) . With this, the heat-conductivity imparting substance 2 is burnt after the preheating thereby to be formed into voids 40, whereby the high heat conductive heat insulation material 1 can improve the heat insulation properties, as shown in Fig. 1(3).

Although the heat-conductivity-imparting substance 2 is graphite in the embodiment, the heat-conductivity-imparting substance in the high heat conductive heat insulation material according to the present invention should not be limited to the graphite. Any material that can be burned off after preheating to be formed into the voids 40 in the insulation layer is acceptable, for example, any other carbon material. In this application, "carbon material" is a material containing carbon, for example, scaled graphite, carbon fiber or carbon black may be suitably used. The heat-conductivity-imparting material may be a single carbon material or a mixture of two or more carbon materials.

Although, for example, Al₂O₃-SiO₂ compounds, Al₂O₃, SiO₂, SiC alone or mixtures thereof can be suitably used as a base material 3 that constitutes the high heat conductive heat insulation material 1, the base material 3 is not limited to them.

The heat-conductivity-imparting substance 2 may be contained in an amount of 5 to 50% by weight in the high heat conductive heat insulation material 1. When an amount of heat-conductivity-imparting substance 2 is less than 5% by weight, the effect of shortening the preheating time by accelerating the temperature rise of the refractory 20 during preheating becomes insufficient, and the effect of improving the heat insulation properties by forming the voids 40 as the result of the burning of the thermal conductivity imparting substance 2 in the insulation layer also becomes insufficient. On the other hand, the strength of the heat insulating material is significantly lowered when the amount of heat-conductivity-imparting substance 2 exceeds 50% by weight.

The high heat conductive heat insulation material 1 may be liquefied with a liquid binder outside of the total of 100% by weight of the base material 3 and the heat-conductivity-imparting substance 2. The liquid binder acts as a binder during construction and hardens when dried. Inorganic binders, organic binders, or mixtures thereof are suitably used as the binder. For example, soda silicate, potassium silicate, soda phosphate, colloidal silica, or mixtures thereof can suitably be used as the inorganic binder. Phenolic resins, sugar hydrolysates and/or reduced starch saccharides, molasses, methylcellulose, starch, natural rubber, casein, vinyl acetate, or mixtures thereof can suitably be used as the organic binder, for example.

Since the high heat conductive heat insulation material 1 of the embodiment is a sprayed insulation material, it is applied by spraying onto the refractory 20 with a spray gun or the like. Although water may be added to the material in this case, the high heat conductive heat insulation material 1 should not be limited to the sprayed insulation material. The high heat conductive heat insulation material 1 can be applied to the surface of the refractory 20 by a roller, brush, or other means, and others that can be constructed by various known construction methods are widely included in the high heat conductive heat insulation material according to the present invention.

### (Embodiment)

The embodiment of the high heat conductive heat insulation material according to the present invention was prepared by mixing 52% by weight of Al₂O₃ as the base material, 37% by weight of SiO₂, 3% by weight of SiC and 8% by weight of a carbon material (graphite) as a heat-conductivity-imparting substance, as shown in Table 1 below. A sprayed insulation material was prepared by adding a liquid binder to the high heat conductive heat insulation material of the embodiment, sprayed onto the surface of the refractory 20 (the continuous casting nozzle) and allowed to dry into a heat insulation layer.

### (Comparative Example)

A comparative example was prepared which comprised 55% by weight of Al₂O₃ as the base material, 40% by weight of SiO₂ and 5% by weight of SiC and did not contain any heat conductivity imparting substance, as shown in Table 1 below. A sprayed heat insulation material was prepared by adding a liquid binder to the high heat conductive heat insulation material, sprayed onto the surface of the refractory 20 (the continuous casting nozzle) and allowed to dry into a heat insulation layer.

**[Table 1]**

| | Comparative example | Embodiment |
|---|---|---|
| Al₂O₃ | 55 | 52 |
| SiO₂ | 40 | 37 |
| Heat-conductivity-imparting substance | - | 8 |
| SiC | 5 | 3 |
| (wt%) | | |

### (Temperature Rise Test)

As shown in Fig. 2, a refractory (continuous casting nozzle) with an insulation layer formed of the high heat conductive heat insulation material of the embodiment was placed in a furnace of the preheating device 10, and a refractory (continuous casting nozzle) with an insulation layer formed of the insulation material of the comparative example was also placed in the furnace of the preheating device 10. The refractories were heated by a burner 22 in order that temperature rise transitions of the refractories 20 (continuous casting nozzles) and temperature transition in the furnace might be measured using a thermocouple 23 to be stored in a data logger 24.

### (Test Results)

Table 2 below shows the measurement results of the above temperature rise test.

**[Table 2]**

| | | Comparative example | Embodiment |
|---|---|---|---|
| Preheating time (min) | Temperature in furnace (°C) | Refractory temperature (°C) | Refractory temperature (°C) |
| 1 | 273 | 96 | 140 |
| 2 | 390 | 143 | 196 |
| 3 | 505 | 196 | 268 |
| 4 | 611 | 262 | 343 |
| 5 | 700 | 330 | 426 |
| 6 | 778 | 398 | 513 |
| 7 | 823 | 459 | 576 |
| 8 | 840 | 500 | 621 |
| 9 | 861 | 541 | 665 |
| 10 | 872 | 576 | 703 |
| 11 | 885 | 609 | 735 |
| 12 | 895 | 641 | 760 |
| 13 | 905 | 668 | 781 |
| 14 | 915 | 695 | 801 |
| 15 | 925 | 718 | 817 |
| 16 | 935 | 739 | 833 |
| 17 | 943 | 761 | 847 |
| 18 | 951 | 780 | 861 |
| 19 | 959 | 797 | 875 |
| 20 | 967 | 815 | 890 |
| 25 | 1002 | 890 | 948 |
| 30 | 1035 | 949 | 996 |
| 35 | 1063 | 995 | 1033 |
| 40 | 1088 | 1031 | 1065 |
| 45 | 1107 | 1061 | 1093 |

### (Consideration)

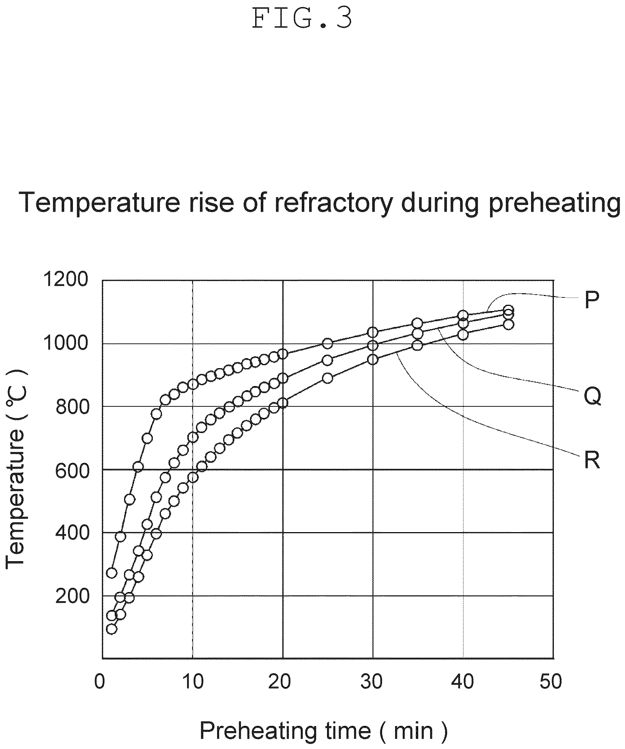

In Fig. 3, which is a graph showing the measurement results shown in Table 2 above, reference symbol P denotes the temperature rise transition in the furnace of the preheating device 10, and reference symbol Q denotes the temperature rise transition of the refractory with the insulation layer formed of the high heat conductive heat insulation material of the embodiment, and reference symbol R denotes the temperature rise transition of a refractory having a heat insulation layer formed of the heat insulation material of the comparative example. It is confirmed from Fig. 3 that the refractory with the insulation layer formed of the high heat conductive heat insulation material of the embodiment is faster in temperature rise than the refractory with the insulation layer formed of the insulation material of the comparison example. For example, taking the time for the refractory to reach 800°C as an example, the refractory with the insulation layer formed of the high heat conductive heat insulation material of the embodiment takes about 14 minutes (801°C) after the start of preheating, while the refractory with the insulation layer formed of the insulation material of the comparison example takes about 19 minutes (797°C) after the start of preheating. This means that the refractory with the insulation layer formed of the high heat conductive heat insulation material of the embodiment reaches 800°C about 5 minutes earlier. The refractory with the insulation layer formed of the high heat conductive heat insulation material of the embodiment contains 8% by weight of the heat-conductivity-imparting substance (carbon material), as shown in Table 1. It is assumed that increasing the weight percentage of the heat-conductivity-imparting substance (carbon material) will further increase the speed of temperature rise.

### (Heat Insulation Test)

As shown in Fig. 2, a refractory (continuous casting nozzle) with an insulation layer formed of the high heat conductive heat insulation material of the embodiment was placed in the furnace of the preheating device 10, and a refractory (continuous casting nozzle) with an insulation layer formed of the insulation material of the comparative example was also placed in the furnace of the preheating device 10. The refractories were heated by a burner 22 in order that temperature drop transitions of the refractories (continuous casting nozzles) might be measured using the thermocouple 23 to be stored in the data logger 24.

### (Test Results)

Table 3 below shows the measurement results of the above heat insulation test.

**[Table 3]**

| | Comparative example | Embodiment |
|---|---|---|
| Time (min) | Refractory temperature (°C) | Refractory temperature (°C) |
| 1 | 1182 | 1194 |
| 2 | 1102 | 1118 |
| 3 | 1027 | 1038 |
| 4 | 955 | 974 |
| 5 | 890 | 904 |
| 6 | 831 | 846 |
| 7 | 776 | 789 |
| 8 | 719 | 728 |
| 9 | 660 | 673 |
| 10 | 604 | 619 |
| 11 | 559 | 569 |
| 12 | 519 | 525 |
| 13 | 477 | 481 |

### (Consideration)

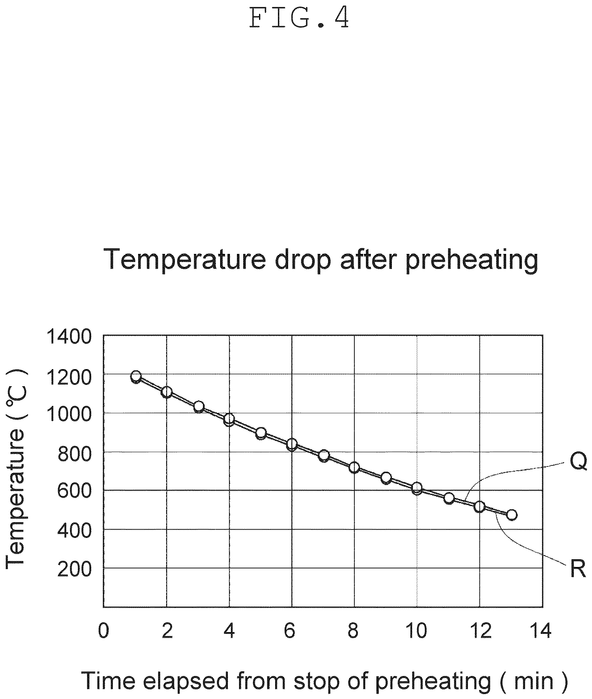

In Fig. 4, which is a graph showing the measurement results shown in Table 3 above, reference symbol Q denotes the temperature drop transition of the refractory after preheating, which refractory has the heat insulation layer formed of the high heat conductive heat insulation material of the embodiment, and reference symbol R denotes the temperature drop transition of the refractory with the heat insulation layer formed of the heat insulation material of the comparative example. It is confirmed from Fig. 4 that the refractory with the heat insulation layer formed of the high heat conductive heat insulation material of the embodiment is gentler in temperature drop after preheating than the refractory with the insulation layer formed of the insulation material of the comparison example, and that the refractory with the insulation layer formed of the high heat conductive heat insulation material of the embodiment has a higher heat insulation performance than the refractory with the insulation layer formed of the insulation material of the comparison example. Furthermore, the refractory with the heat insulation layer formed of the high heat conductive heat insulation material of the embodiment contains 8% by weight of the heat-conductivity-imparting substance (carbon material) as shown in Table 1, and it is assumed that the temperature drop becomes gentler and the insulation performance is further improved when the weight percentage of the heat-conductivity-imparting substance (carbon material) is increased.

### Explanation of Reference Symbols

- 1: high heat conductive heat insulation material;
- 2: substance imparting heat conductivity;
- 3: base material;
- 10: preheating device;
- 20: continuous casting nozzle (refractory);
- 21: discharge port;
- 22: burner;
- 23: thermocouple;
- 24: data logger;
- 30: heat insulation material; and
- 40: voids.

## Claims

1. A high heat conductive heat insulation material for coating a surface of a refractory object used in casting, **characterized in that** the heat insulation material contains a substance imparting heat conductivity.

2. The high heat conductive heat insulation material of claim 1, wherein the substance imparting heat conductivity is a carbon material.

3. The high heat conductive heat insulation material of claim 2, wherein the carbon material is scale graphite, carbon fiber or carbon black.

4. The high heat conductive heat insulation material of claim 2 or 3, wherein the substance imparting heat conductivity is a mixture of two or more types of the carbon materials.

5. The high heat conductive heat insulation material of any one of claims 1 to 4, wherein the substance imparting heat conductivity is contained in 5-50% by weight.
